# EUROPEAN PATENT APPLICATION

(11) **EP 4 553 741 A1**
(43) Date of publication of application: **14.05.2025**
(21) Application number: 24212073.1
(22) Date of filing: 11.11.2024
(51) Int. Cl.: G06Q 30/0204, G06Q 30/0251

(54) **SERVING CONTENT**

(30) Priority: 10.11.2023 US 202363548003 P
(71) Applicant: Blis Global Ltd, London W1W 7LT (GB)
(72) Inventor: MCKEE, Aaron Kameron, CT 06611, CT 06611 (US); NIKOLAOU, Stefanos, Glasgow, G31 4PA (GB); SCOTT, Daniel David Peter, Edinburgh, EH5 1DB (GB)
(74) Representative: Atkinson & Company Intellectual Property Limited

(57) **Abstract**

A processing system receives audience area data defining a plurality of geographical entities (Q, R, S, T, U). The entries are clustered (904) in response to geographical data (202) for said entities by processing the geographical data with audience movement signals representing audience movement between said entities, to define a plurality of entity clusters (A, B, C, D). Audience similarity is quantified for selected pluralities of the geographical entities by obtaining similarity scores for entities in different entity clusters. Similar entities are allocated to a holdout group (207) and a preferred group (208) in response to their similarity score. Content is served to the preferred group thereby optimally configuring audience devices for subsequent measurement of audience uplift (204).

## Description

The present invention relates to method performed by a processing system of the type configured to receive audience movement signals responsive to audience movement between a plurality of geographical entities and to process the movement signals with audience area data representing the plurality of geographical entities.

The present invention also relates to an apparatus of the type for serving content to audience devices on a network in response to audience movement signals responsive to audience movement between a plurality of geographical entities and to process the movement signals with audience area data representing the plurality of geographical entities

The majority of online services are funded by advertising. The effectiveness of advertising can be measured automatically by gathering large amounts of data that tracks user behaviour across multiple locations and networks. Increasingly, user tracking is subject to laws intended to maintain user privacy. This results in a tension between the funding of services by advertising and the privacy of users of those services.

As a result, the efficacy of advertising campaigns is becoming increasingly difficult to measure using established methods. From the point of view of advertisers, this results in greater costs in placing advertisements. From the point of view of users, their privacy is increased but the advertisements they see tend to become less relevant and increase the likelihood of wasting a users' time.

Considerable infrastructure for bidding for and placing online advertisements already exists, but its value is being eroded as user privacy is increasingly protected. Ideally, such infrastructure would be used to provide relevant and useful advertising, while respecting and enabling privacy.

According to a first aspect of the present invention there is provided a method of the aforesaid type, characterized by: clustering the entities by processing the audience movement signals with the audience area data to define a plurality of entity clusters; quantifying audience similarity for selected pluralities of the geographical entities by obtaining similarity scores for entities in different entity clusters; allocating similar entities to a holdout group and a preferred group in response to their quantified audience similarity; and preferentially transmitting content signals to audience devices for audience members in the preferred group, thereby establishing an optimal audience device configuration for subsequent measurement of audience uplift.

The method may include measuring audience uplift in response to signals for a resulting audience behavior in the preferred group and signals for a corresponding audience behavior in the holdout group.

The allocating step may include allocating a geographical entity to a buffer group that geographically separates a portion of the holdout group from the preferred group.

The clustering step may include defining the plurality of entity clusters in response to the geographical data in a distance matrix and may further include defining the plurality of entity clusters in response to the audience movement signals in a cross-pollination matrix.

According to a second aspect of the present invention, there is provided an apparatus of the aforesaid type, characterized in that the apparatus comprises one or more processors configured to: cluster the entities by processing the audience movement signals with the audience area data to define a plurality of entity clusters; quantify audience similarity for selected pluralities of the geographical entities by obtaining similarity scores for entities in different entity clusters; allocate similar entities to a holdout group and a preferred group in response to their quantified audience similarity; and preferentially transmit content signals to audience devices for audience members in the preferred group, thereby establishing an optimal audience device configuration for subsequent measurement of audience uplift.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art. Components and processes distinguished by ordinal phrases such as "first" and "second" do not necessarily define an order or ranking of any sort. In the drawings:
*Figure 1* shows an environment for serving advertising content to an audience via a network, including a campaign configuration and control server, a holdout manager and an uplift measurement server;
*Figure 2* details steps performed by the campaign configuration and control server shown in *Figure 1**,* including a step of supplying a list of entities and a step of receiving a list of entity groups;
*Figure 3* illustrates the step of supplying a list of entities and the step of receiving a list of entity groups shown in *Figure 2*;
*Figure 4* details hardware components of the holdout manager shown in Figure 1, including a central processing unit (CPU), a non-volatile computer-readable medium drive and random access memory;
*Figure 5* details the contents of the non-volatile computer-readable medium drive shown in *Figure 4**,* including pre-calculation instructions and holdout manager instructions;
*Figure 6* details the contents of the random access memory shown in Figure 4, including a distance matrix and a cross-pollination matrix;
*Figure 7* details steps performed by the CPU shown in *Figure 4* while executing the pre-calculation instructions shown in *Figure 5*;
*Figure 8* details geographical entities in the list of entities supplied in Figure 2;
*Figure 9* details steps performed by the CPU shown in *Figure 4* while executing the holdout manager instructions shown in *Figure 5**,* including a step of clustering, a step of allocating clustered entities to groups A and B and a step of allocating clustered entities to groups C and D;
*Figure 10* details the distance matrix and the cross-pollination matrix shown in *Figure 6*;
*Figure 11* details the clustering step shown in *Figure 9**;*
*Figure 12* illustrates the effect of the clustering step shown in *Figure 9**;*
*Figure 13* details the step of allocating clustered entities to groups A and B shown in *Figure 9**,* including a step of finding a matching candidate;
*Figure 14* details the step of finding a matching candidate shown in *Figure 13**,* including a step of searching through unused clusters, including a step of obtaining a similarity score;
*Figure 15* details the step of searching through unused clusters shown in *Figure 14**,* including a step of obtaining a similarity score;
*Figure 16* illustrates the steps of obtaining a similarity score shown in *Figure 14* and *Figure 15*;
*Figure 17* details the step of allocating clustered entities to groups C and D shown in *Figure 9**;*
*Figure 18* illustrates the effect of the steps of *Figure 9**;*
*Figure 19* details steps performed by the uplift measurement server shown in *Figure 1*; and
*Figure 20* illustrates results provided by performing the steps shown in *Figure 19**.*

### Figure 1

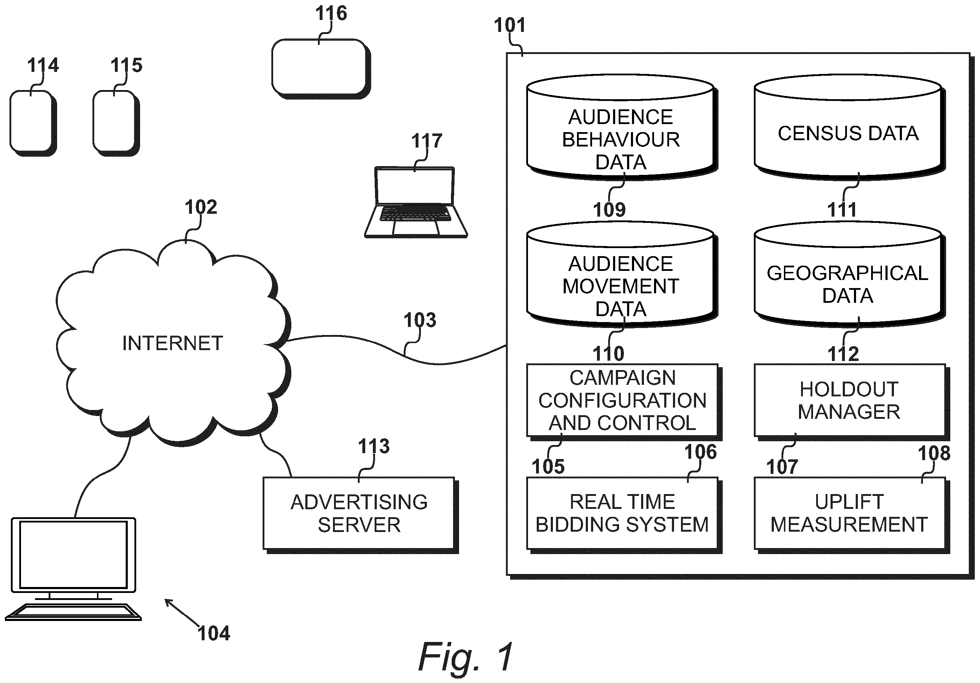

An environment for serving content to an audience via a network is shown in *Figure 1**.* A campaign content control and measurement system **101** is connected to the Internet **102** via a fibre-optic data connection **103.** A configuring terminal **104** interacts with components of the system **101** to configure an advertising campaign. Components of the system **101** include a campaign configuration and control server **105,** a realtime bidding system **106,** a holdout manager **107** and an uplift measurement server **108.** Data stored on the system **101** includes anonymized audience behaviour signals **109,** audience movement signals **110,** census data **111** and geographical data **112.** Audience movement signals **110** includes signals representing movement of audience devices within and between geographical entities. These audience movement signals **110** derive from anonymised location-specifying transmissions from potentially millions of audience devices.

The configuration terminal **104** communicates via the Internet **102** with the campaign configuration and control server **105,** which sets up and runs an advertising campaign by communicating with the other system components **106** to **112.** In certain embodiments, components **105** to **112** may be individually or collectively implemented as a computer system located in the same site or at multiple sites.

Once configured, the realtime bidding system **106** communicates with an advertising server **113** via the Internet **102.** The bidding system **106** automatically bids for advertising slots as these become available in various locations and on various user devices connected to the Internet **102.**

Connected audience devices include mobile phones **114** and **115,** a tablet **116** and a laptop computer **117.** Such devices facilitate access to an audience of millions of users. Applications running on the devices **114** to **117** automatically include advertising slots whose availability is mediated by the advertising server **113,** which sells slots, as they become available, to the highest bidder in a bidding war that takes place in real time.

In such an environment, the ability to determine the effectiveness of an advertising campaign is valuable. At the same time, increasing privacy measures make it more difficult for advertisers to directly measure the performance of advertising campaigns. The system **101** optimises advertising by configuring audience devices **114** to **117** in such a way as to optimally measure the effectiveness of an advertising campaign while respecting user privacy. The key component which enables this is the holdout manager **107.**

### Figure 2

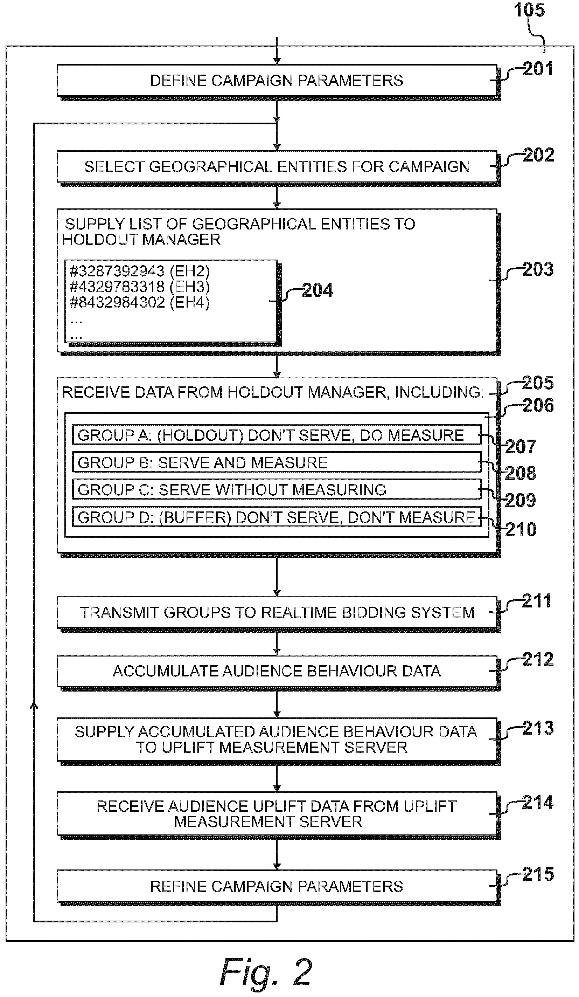

Actions performed by the campaign configuration and control server **105** in response to instructions from the configuration terminal **104** are summarised in *Figure 2**.* At step **201** campaign parameters are received from the terminal **104.** Such parameters include the timing of the campaign, bidding parameters such as maximum expenditure and sources of content for the advertisements that will be served.

At step **202** geographical entities are selected for the campaign. In this embodiment, the geographical entities are postal districts. Usually, such entities are non-overlapping, but due to their being based on historical postal delivery routes, it is possible for a small amount of entity overlap to occur in some countries. Hence, the term geographical entity should not be taken in a limited sense to mean a strictly two-dimensional area; it can encompass a variety of interpretations, based on or similar to, but not limited to geographical area. The geographical entities have different names in different countries, based on terminology and local language. In the United Kingdom, the geographical entities are selected from about three thousand postal districts. In the United States, geographical entities are selected from approximately forty-two thousand zip codes. Furthermore, when such entities are selected, they are represented in the system **101** using a unique identification code, so that districts in countries that reuse the same naming or numbering can be uniquely identified.

The list of geographical entities is defined in accordance with areas selected for an advertising campaign. For example, an advertising campaign for a chain of grocery stores is directed at entities containing or near one or more of the grocery stores.

At step **203** the list of geographical entities **204** is supplied to the holdout manager **107.** The holdout manager **107** processes the list of entities **204** along with audience movement signals **110,** census data **111** and geographical data **112** to categorise the supplied entities into four groups which are received at step **205.** The groups **206** include Group A **207,** Group B **208,** Group C **209** and Group D **210.** Group A **207** is a holdout group which defines geographical entities where audience behaviour is measured, but to which advertising content is not served. Group B **208** is a preferred group which contains geographical entities to which advertising content is served and resulting audience behaviour will be measured. Group C **209** contains geographical entities to which advertising content is served but in which audience behaviour is not measured. Group D **210** is a buffer group containing geographical entities to which advertising is not served and in which audience behaviour will not be measured.

At step **211** the groups **206** are transmitted to the realtime bidding system **106.** At step **212** audience behaviour signals **109** are accumulated for places in group A **207** and group B **208** while the advertising campaign is run. This accumulation of statistics takes places over hours, days and weeks. During this time, other advertising campaigns may be configured and run simultaneously; this possibility being omitted from *Figure 2* for the sake of clarity.

At step **213** the accumulated audience behaviour data for the campaign is supplied to the uplift measurement server **108.** At step **214** audience uplift data is received from the uplift measurement server **108.** The received uplift data may be viewed on the configuring terminal **104** to determine the effectiveness of an advertising campaign. At step **215,** campaign parameters are refined in response to the uplift data received at step **214,** and steps **202** to **215** continue repeating with further refinements and improvements in the efficiency with which advertising content is served to an Internet-connected audience. It will be appreciated that uplift measurement is facilitated by the preferential transmission of advertising content signals to a preferred group **208** of potentially millions of devices **114** to **117** and excluding sending the same advertising content signals to one or more other groups. This establishes an optimal audience device configuration for subsequent measurement of audience uplift.

### Figure 3

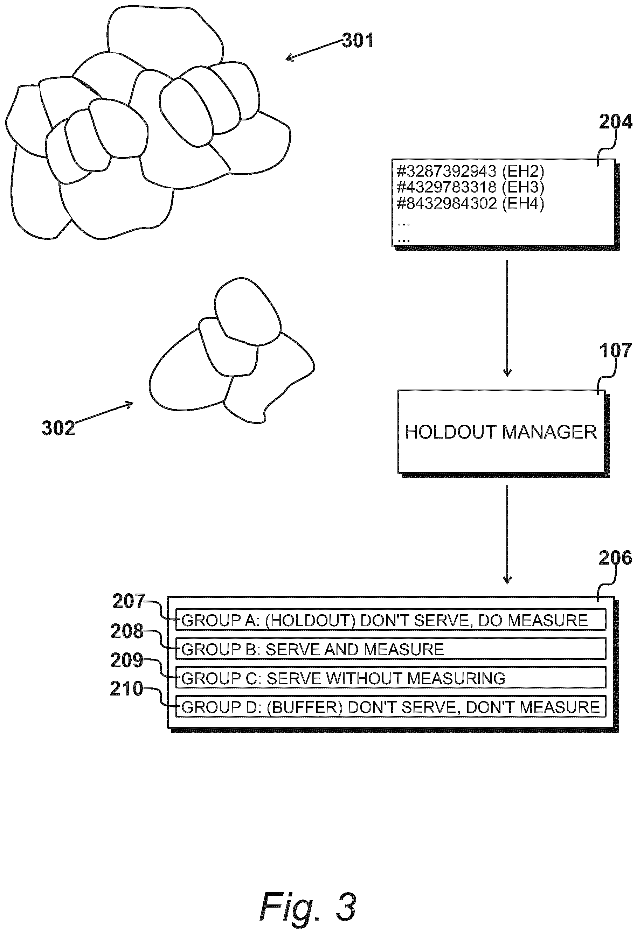

The effect of steps **202, 203** and **205** shown in *Figure 2* is illustrated in *Figure 3**.* Postal districts in multiple cities **301** and **302** are defined as geographical entities in the list **204** supplied to the holdout manager **107.** The holdout manager **107** provides an output in the form of groups **206** that define which geographical entities in cities **301** and **302** should be served advertisements and where audience behaviour measurements should be made when the advertising campaign is running.

### Figure 4

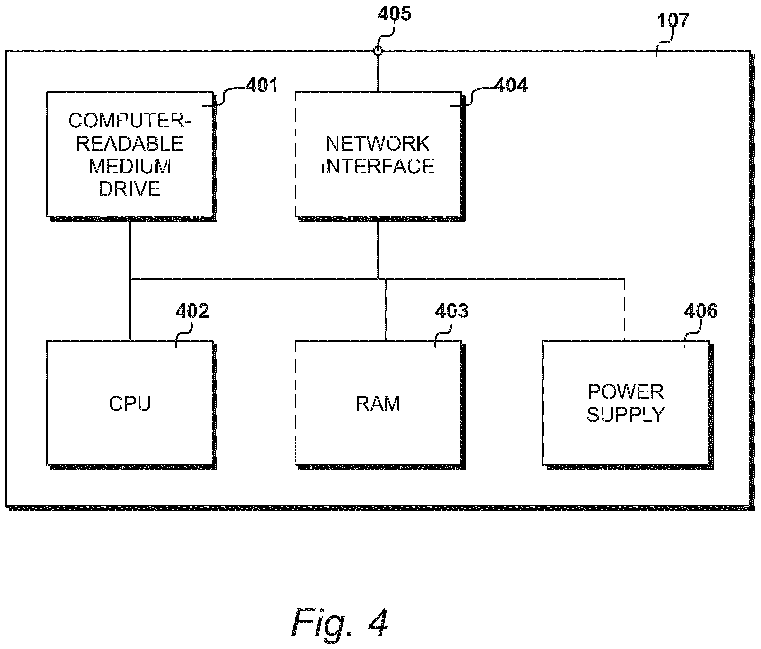

Hardware components of the holdout manager **107** shown in *Figure 1* are detailed in *Figure 4**.* The holdout manager hardware **107** is a computer system located in a server farm along with other system components **105** to **108.** Each of these components may be virtualised, in such a way as to make most efficient use of available hardware. Each component **105** to **107** may use a fraction of a physical server. Conversely, each component **105** to **108** may use or migrate to multiple physical servers. Such details are omitted for the sake of clarity; and the holdout manager **107** is described with reference to the hardware shown in *Figure 4*, which facilitates the required functionality.

Hardware components of the holdout manager **107** include a non-volatile computer-readable medium drive **401** that stores instructions and data for a central processing unit (CPU) **402.** The drive **401** is a Solid-State Drive (SSD) that includes one terabyte of high-speed FLASH memory. Sixteen megabytes of random access memory (RAM) **403** provide high speed instruction and data storage for the CPU **402** when it is executing instructions. A network interface **404** provides access to the Internet **102** via a local area network connection **405.** A power supply **406** provides power to the components **401** to **404** of the holdout manager **107.**

### Figure 5

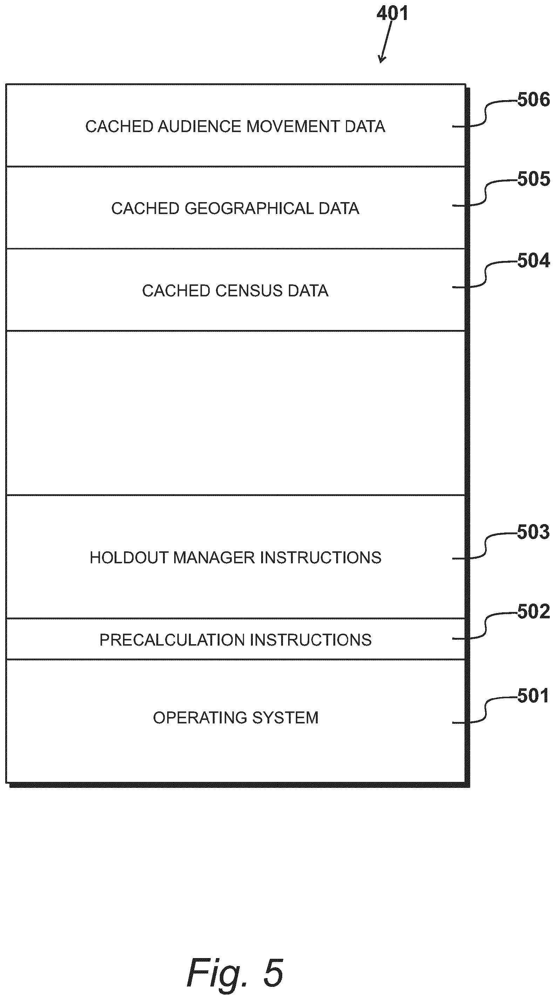

Contents of the drive **401** shown in *Figure* 4 are detailed in *Figure 5**.* An operating system **501** provides hardware abstraction and task switching instructions for applications running on the holdout manager **107.** Pre-calculation instructions **502** are executed by the CPU **402** to periodically update audience movement signals **110** and occasionally update geographical data **112.** Holdout manager instructions **503** instruct the CPU **402** to process the list of geographical entities **204** and to produce data representing groups of entities **206** for an advertising campaign, including the holdout group **207** and a preferred group **208.**

Contents of the drive **401** further include cached census data **504** which is data copied locally from census data **111** shown in *Figure 1*. Cached geographical data **505** includes data copied locally from geographical data **112** shown in *Figure 1*. Cached audience movement data **506** includes signals copied locally from audience movement signals **110** shown in *Figure 1**.*

### Figure 6

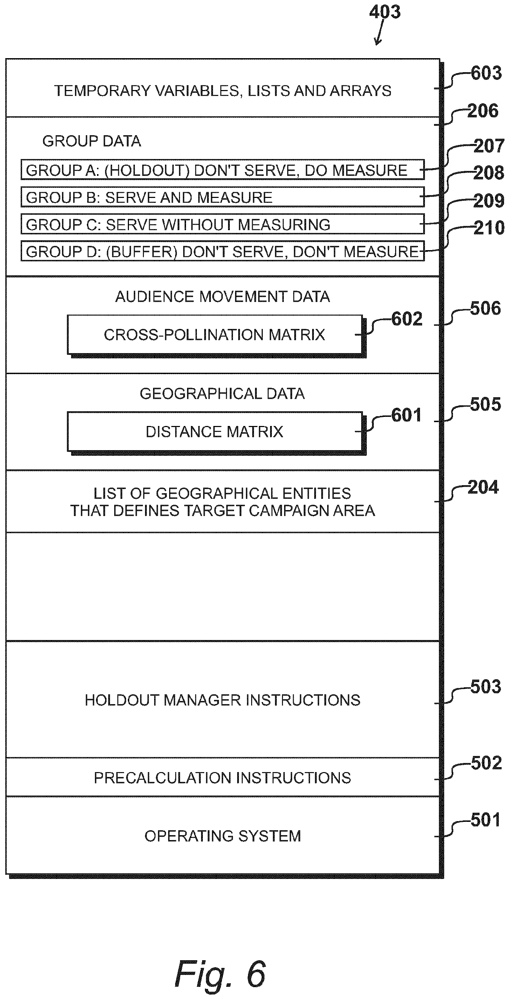

Contents of RAM **403** shown in *Figure 4* are detailed in *Figure 6**.* The operating system instruction **501** shown in *Figure 5* are copied to RAM **403** during their execution by the CPU **402.** Pre-calculation instructions **502** and holdout manager instructions **503** are similarly copied into RAM **403** for execution by the CPU **402.**

Cached geographical data **505** is also copied to RAM **403,** and a subset of geographical data **505** is instantiated as a distance matrix **601** computed for geographical entities **204** in the target campaign area. Cached audience movement data **506** is copied into RAM **403,** and a subset of audience movement data **506** is instantiated as a cross-pollination matrix **602** for geographical entities **204** in the target campaign area. The cross-pollination matrix **602** therefore includes and represents at least some of the audience movement signals **110.**

Group data **206** is produced as a result of executing the holdout manager instructions **503** on the CPU **402,** during which temporary variables, lists and arrays **603** are stored and accessed in RAM **403.**

### Figure 7

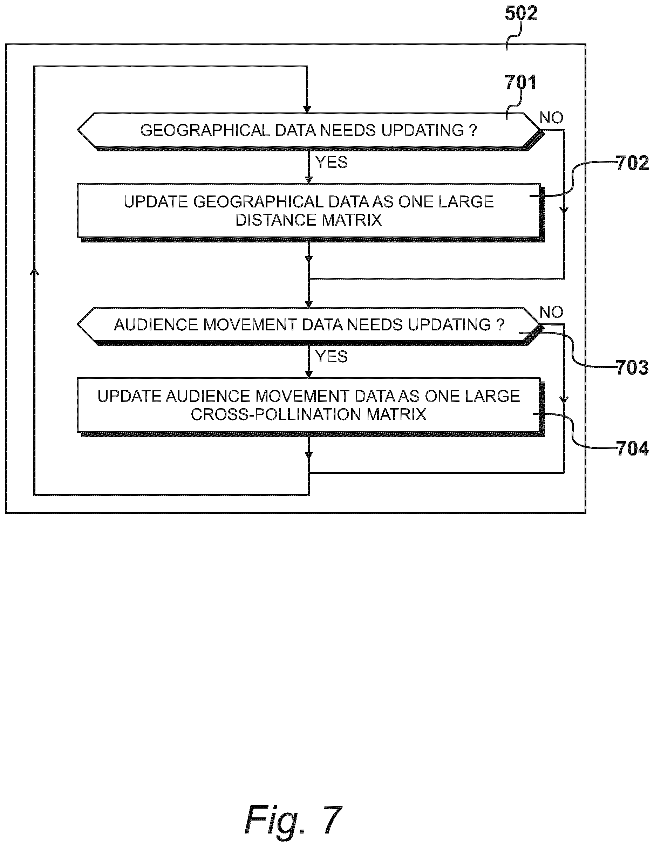

Steps performed by the pre-calculation instructions **502** shown in *Figure* 6 are detailed in *Figure 7*. At step **701** a question is asked as to whether the geographical data **112** needs updating. Geographical data **112** includes the distances between all unique pairings of geographical entities in a country or region. Given thousands of such pairings in a country, the computation is extremely intensive. Fortunately, the geographical data, once computed, rarely changes, and does so only when boundaries change, or an entity is added or removed. A further reason for updating geographical data **112** is a change in the distance metric used to measure distances between geographic entities. If the geographical data does need updating, this is performed at step **702.** At step **702,** all necessary updates are made, so that the geographical data **112** is up to date.

Calculations performed at step **702** include applying a distance metric to permutations of entity pairs and storing the result in a very large matrix. Such calculations are preferably performed by distributing parallel calculations of the matrix to multiple servers in a server farm, using big data methods for parallelizing such calculations efficiently, as will be familiar to those skilled in the art.

At step **703,** a question is asked as to whether audience movement signals **110** need updating with newly received audience movement signals. Audience movement can be seasonal in nature, and requires updates on a monthly or more frequent basis. If an update is required, this is performed at step **704.**

For any given pair of geographical entities, X and Y, audience movement data may be obtained by counting how many devices, such as mobile phones **114** and **115,** appear in both X and Y over a given time period. Thus, audience movement signals **110** are accumulated over a period of time, and combined to provide a count. An optimal time period is one week. In an embodiment, a time period of one day is used. Given thousands of such devices, counted using anonymous identification methods, it is possible to obtain a statistical measure of cross-pollination between X and Y. In the case that all devices seen in X are also seen in Y during the same week, the cross-pollination between X and Y is given the maximum value of one. If no devices from X are seen in Y during one week, the cross-pollination value is zero.

As with geographical data **112,** updating audience movement signals **110** requires a lot of computation, due to there being millions of entity pairs. For this reason, big data methods are used, and the calculation is distributed across multiple servers when necessary.

Steps **701** to **704** are performed by the holdout manager as a background operation, and only use up computing resources when they are occasionally necessary.

### Figure 8

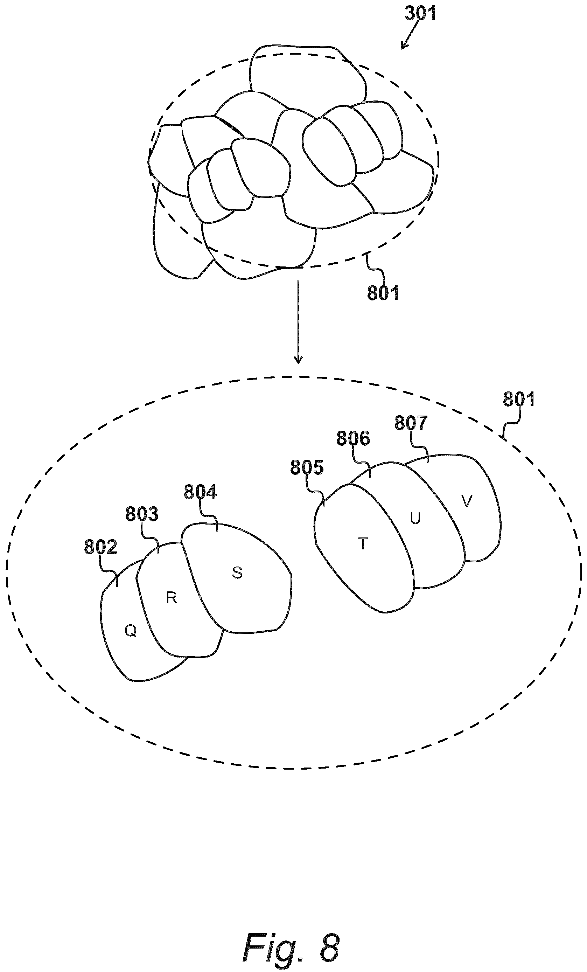

Geographical entities in the city **301** shown in Figure 3 are detailed in *Figure 8**.* A region **801** includes selected postal districts Q **802,** R **803,** S **804,** T **805,** U **806** and V **807** that correspond to geographical entities used in the following examples of the processing steps performed by the holdout manager **107.** It will be understood that, in practice, many hundreds or thousands of such geographical entities will be processed. A subset **802** to **807** is chosen for the sake of clarity.

### Figure 9

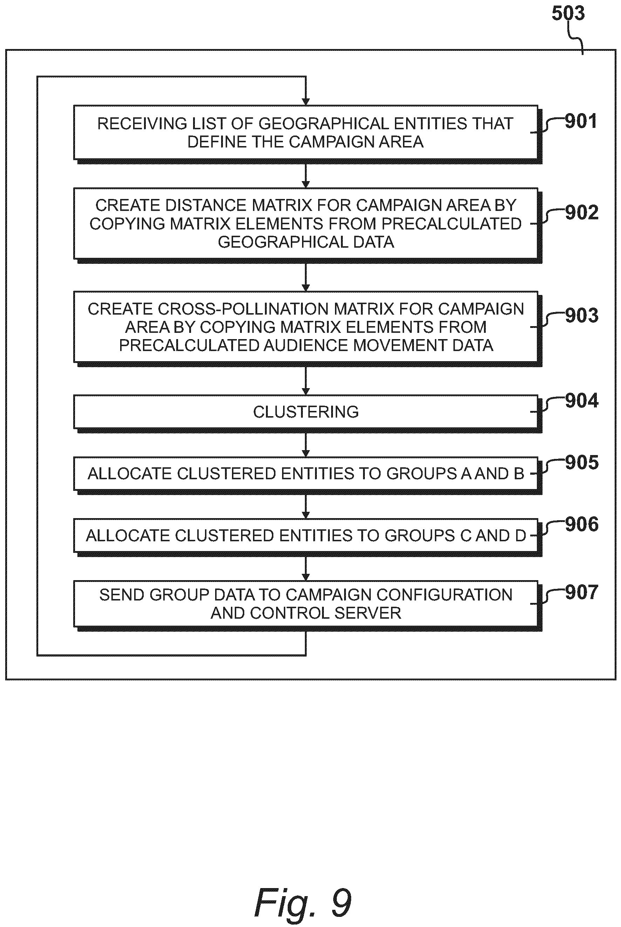

The steps performed by the holdout manager instructions **503** shown in Figure 6 are detailed in *Figure 9**.* At step **901,** the list of geographical entities **204** is received from the campaign configuration and control server **105.** At step **902** a distance matrix is created for the campaign area, by copying matrix elements from the precalculated geographical data **112.** At step **903** a cross-pollination matrix is created for the campaign area, by copying matrix elements from the audience movement signals **110.**

Clustering is performed at step **904,** in which geographical entities are allocated to clusters. At step **905,** clustered entities are allocated to Group A **207** and Group B **208.** At step **906,** remaining clustered entities are allocated to Group C **209** and Group D **210.** At step **907** data representing the groups **207, 208, 209** and **210** is sent to the campaign configuration and control server **105.** Step **907** determines that advertising content will be served only to geographical entities in groups B **208** and C **209,** and that audience behaviour will be measured only in geographical entities in groups A **207** and B **208.**

### Figure 10

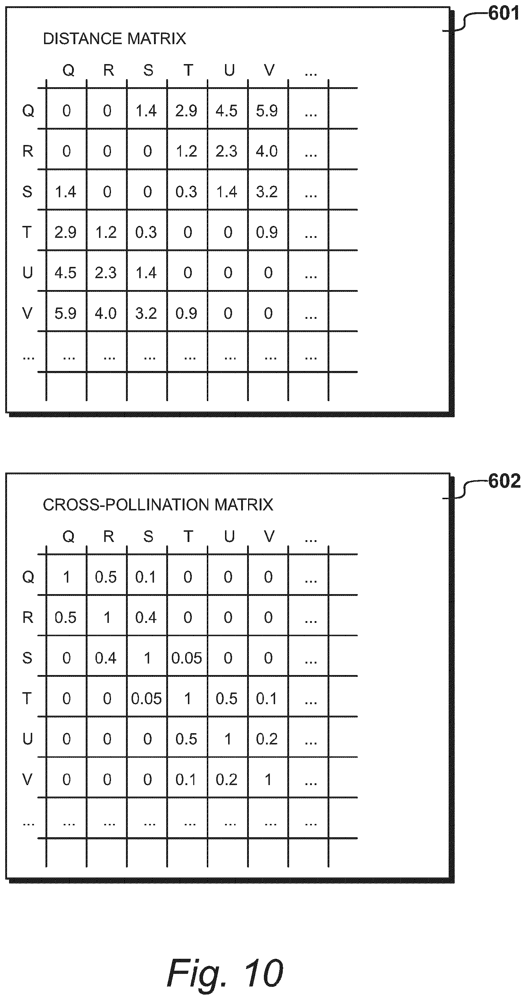

The result of performing steps **902** and **903** shown in Figure 9 is illustrated in Figure 10. The distance matrix **601** includes rows and columns for each of geographical entities Q, R, S, T, U and V **802** to **807.** Neighbouring entities, such as Q and R, have a distance of zero, due to the fact that the distance metric applied in step **702** considers bordering entities to have no distance between them. Pairs, such as Q **802** and S **804** that do not share any border, have non-zero distance values. Distances are in kilometres. The distance matrix **601** is symmetric, so in practice only half of it needs to be stored in physical RAM **403.** In practice, the distance matrix **601** for an advertising campaign may have hundreds or thousands of such rows and columns.

The cross-pollination matrix **602** is also symmetric. Full cross-pollination is seen only in the redundant case of an entity with itself. Practical cross-pollination values are usually much smaller, and for distant entities, may be zero or have statistically negligible values. The cross-pollination matrix **602** has the same size as the distance matrix **601.**

### Figure 11

A goal when designing an advertising campaign is to set aside a portion of an audience that does not see the advertisements; such that A/B testing can be performed, resulting in the measurement of audience uplift due to the advertising campaign. Optimal design for such testing is complicated by the enormous number of permutations of comparable places in any significant geographical area. This is further complicated by audience movement between locations.

To solve these issues, the holdout manager **107** first performs clustering **904** prior to allocating geographical entities from the clusters to groups **206** at steps **905** and **906.**

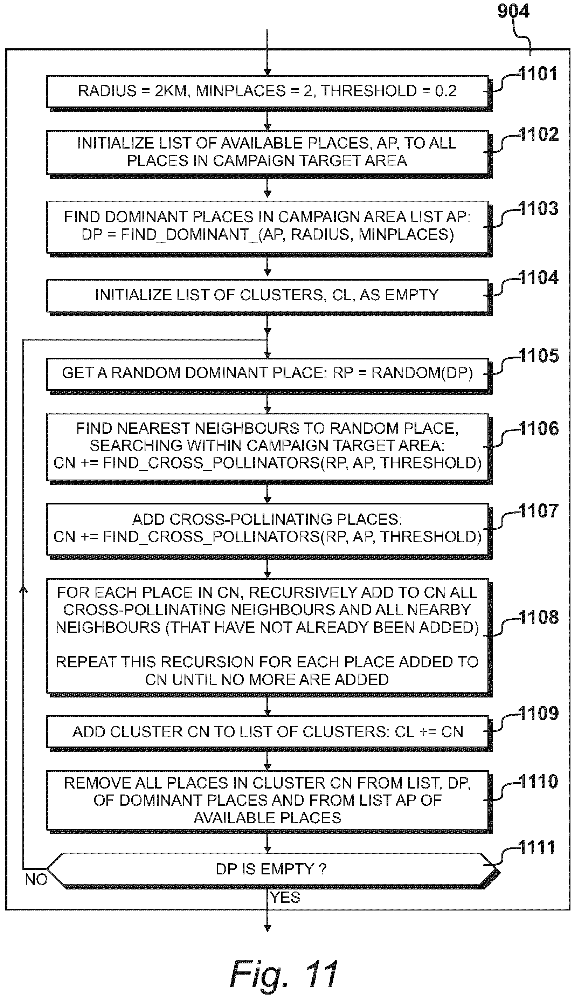

The clustering step **904** shown in *Figure 9* is detailed in *Figure 11**.* At step **1101** three constants are defined that affect subsequent operations. For the purposes of a brief and convenient description, geographical entities, such as postal districts **802** to **807,** will be referred to as places. The terms geographical entity and place are interchangeable in the description that follows. At step **1102** a list of available places, AP, is initialized with all places in the campaign target area **301, 302.**

At step **1103** dominant places are identified and stored as a list, DP. A dominant place is one that has two or more places nearby that are within a radius of two kilometres, in accordance with constants defined at step **1101.** At step **1104** a list of clusters, CL, is initialized as empty.

At step **1105** a dominant place, RP, is randomly chosen from the list of dominant places, DP. At step **1106** its nearest neighbours are identified as a list, CN. Nearest neighbours are considered those within a radius of two kilometres of RP. At step **1107** cross-pollinating places are added to CN. Cross-pollinating places are those whose cross-pollination with RP exceeds a threshold of one fifth, in accordance with the constant defined at step **1101.** This cross-pollination value is obtained from the cross-pollination matrix **602** detailed in *Figure 10**.*

At step **1108** a recursion is performed that effectively repeats steps **1106** and **1107** considering each place in the list CN as if it were RP. It will be appreciated that this recursion increases the size of the list CN until it naturally stabilises with some number of places, dependent upon the constants defined in step **1101.** Cluster CN is then added to the list of clusters CL at step **1109.** At step **1110** all places in cluster CN are removed from the list of dominant places, DP, and from the list of available places, AP.

At step **1111** a question is asked as to whether the list of dominant places is now empty. If not, steps **1105** to **1111** are repeated. Otherwise, clustering is complete, and the result is the list of clusters, CL. Each cluster contains one or more places. Contents of AP, DP, CL and CN are all stored as part of temporary memory **603** shown in *Figure 6**.*

The clustering performed by the steps of *Figure 11* considers places to be close to each other when they have significant cross-pollination, even though they may be a considerable distance apart. For example, two cities **301** and **302** may be geographically distant, but some cross-pollination may occur between some of their districts as a result of people commuting to and from work.

### Figure 12

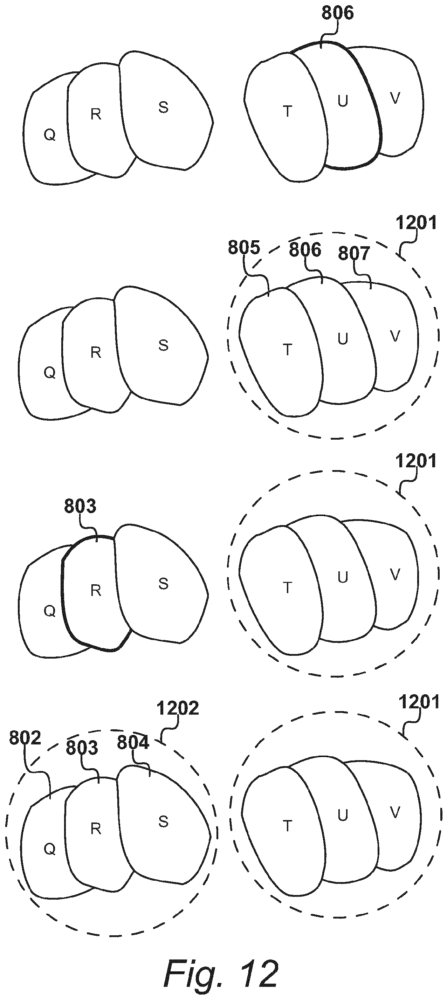

The clustering performed by the steps of *Figure 11* is illustrated in *Figure 12* using a minimal example of six postal districts Q, R, S, T, U and V, **802** to **807** considered in isolation from surrounding districts. District U **806** is randomly selected as a dominant district at step **1105.** Steps **1106, 1107** and **1108** result in districts T **805** and V **807** being added to form a first cluster **1201.** On a subsequent iteration of the clustering steps, district R **803** is randomly selected as a dominant district at step **1105.** Districts Q **802** and S **804** are then added to form a second cluster **1202.**

In practice, many tens, hundreds or thousands of such geographical entities are clustered, with each cluster's size being constrained by the constants defined at step **1101** in *Figure 11*. Constants may be adjusted by country, region and season, in order to optimally provide clusters of the most suitable size.

### Figure 13

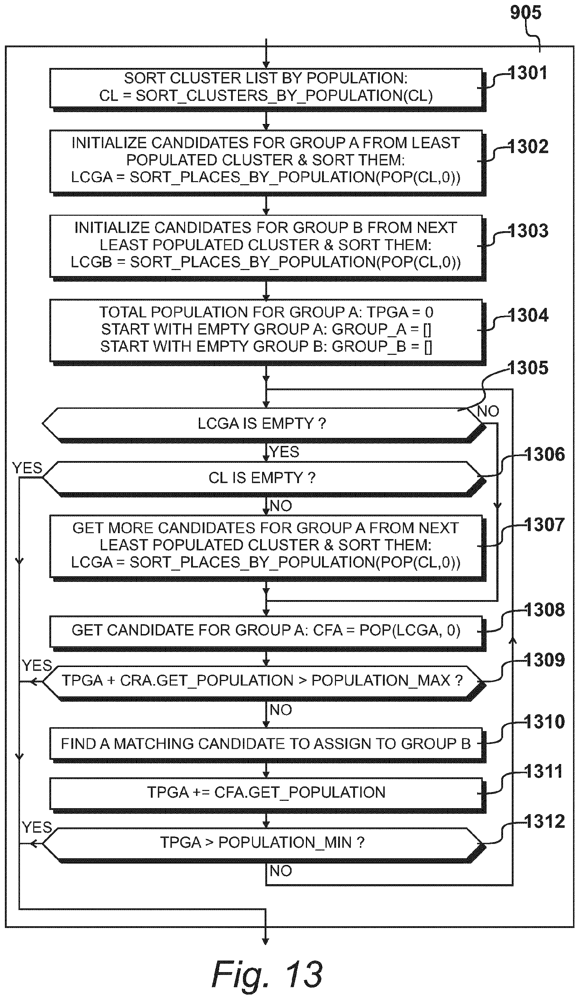

Step **905** for allocating entities to groups A and B, shown in *Figure 9**,* is detailed in *Figure 13**.* It is desired to have a portion of the advertising campaign area allocated to Group A **207.** Typically Group A **207** will represent ten percent of the population in the target campaign area. The steps described with reference to *Figure 13* are constrained by two parameters: POPULATION_MIN and POPULATION_MAX. These are set to slightly less and slightly more than ten percent of the campaign area population.

At step **1301** the cluster list, CL, is sorted in ascending order by population so that the cluster with the smallest population is first in the list. At step **1302** candidates for Group A are removed from the first cluster in CL, which is the cluster having the smallest population, and placed in a list LCGA. These candidates are themselves sorted in ascending order by population, so the least populous is first in LCGA. At step **1303** candidates for Group B are removed from the new first cluster in CL, which is the cluster having the second smallest population, and placed in a list LCGB. These candidates for Group B are also sorted in ascending order by population, so the least populous is first in list LCGB.

The reason for sorting in ascending order of population is to maximise granularity of population increments when aiming to satisfy the goal of having Group A's population between POPULATION_MIN and POPULATION_MAX.

At step **1304** the total population for Group A, TPGA, is set to zero, and Group A and Group B are initialized as empty.

At step **1305** a question is asked as to whether LCGA is empty. On the first iteration, this will be false. However, if it is empty, and at step **1306** the cluster list, CL, is also empty, this represents the end condition for allocating entities to groups A and B. If CL isn't empty, but LCGA is empty, at step **1307** more candidates for Group A are added to LCGA by repeating what was done earlier at step **1302.** If LCGA did not require refilling, control is directed from step **1305** to step **1308.**

At step **1308** a candidate place for Group A is removed from LCGA, from the top of the list, retrieving the least populous available, and assigning it to CFA. At step **1309,** if the combination of the population of CFA with TPGA is greater than POPULATION_MAX, this represents the end condition for allocating entities to groups A and B.

Otherwise, at step **1311,** a search is performed to find a matching candidate entity to CFA that will be allocated to Group B **208.** Step **1310** will be detailed below. At step **1311** CFA's population is added to TPGA. At step **1312,** if TPGA is now above POPULATION_MIN, this represents the end condition for allocating entities to groups A and B. Alternatively, control is directed back to step **1305** and steps **1305** to **1312** are repeated until the population represented by Group A meets the criteria specified by POPULATION_MIN and POPULATION_MAX, thereby ensuring that Group A represents approximately ten percent of the population of the campaign target area.

It will be appreciated that the population allocated to preferred Group B does not need to be so constrained, because Group B will be served advertisements, so there is no cost associated with assigning potential audience members to Group B.

### Figure 14

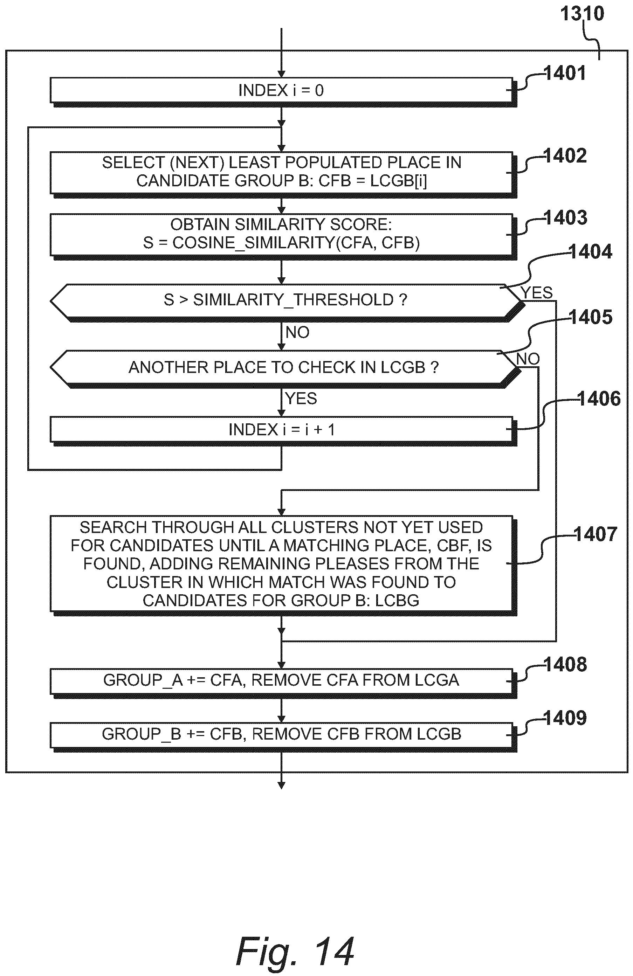

The step **1310** of finding a matching candidate to assign to Group B, shown in *Figure 13**,* is detailed in *Figure 14*. At step **1401** an index, i, is set to zero. At step **1402** the next least populous place in LCGB is copied into a candidate for Group B, CFB. At step **1403** the similarity between CFA and CFB is obtained using a cosine similarity function. Similarity is based upon factors in census data **111,** cached at **504,** that define average household income, house ownership, number of cars per household, and so on, for a geographical entity. The similarity score, S, takes a value between minus one and one. If the similarity score is greater than a threshold value of 0.9, CFA and CFB are considered to be well-matched. If not, at step **1405** LCGB is checked to see if it contains other candidates for Group B. If there are more candidates, the index, i, is incremented at step **1406** and steps **1402** to **1406** are repeated until either a match is found, or until there are no more candidates in LCGB.

If the contents of LCGB are exhausted before a match for CFA is found, control is directed from step **1405** to step **1407.** At step **1407** a search is made through all unused clusters until a matching place is found. In practice, this is nearly always successful. Other places in the same cluster in which the match is found are added to the candidates for Group B, LCGB. The effect of this is to refill LCGB and enable steps **1305** to **1312** of Figure 13 to continue iterating.

Once a match has been found, either at step **1404** or as a result of step **1407,** at step **1408** CFA is added to Group A **207** and removed from LCGA. Then, at step **1409,** CFB is added to Group B **208** and removed from LCGB. The effect of this is to build up Group A to be similar to Group B, such that behaviours of an audience in Group A can be expected to be very similar to behaviours of an audience in Group B. By withholding advertising content from Group A, the effectiveness of an advertising campaign can then be measured. By clustering **904** and then allocating **905,** permutations are reduced so that a computer system such as the one shown in Figure 4 can be used to perform allocation.

### Figure 15

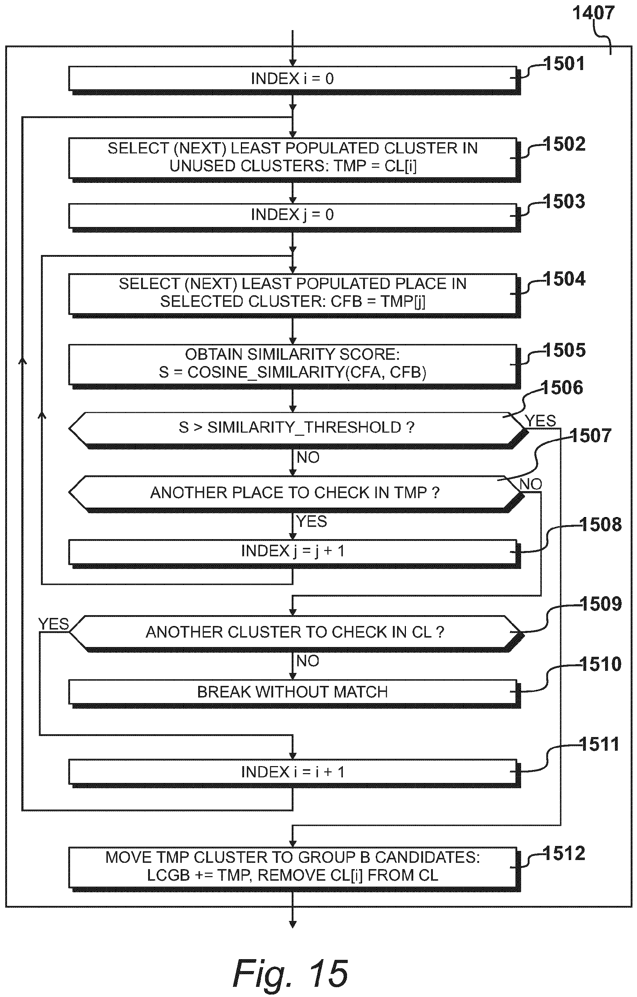

Step **1407** for searching in unallocated clusters for a match, shown in *Figure 14**,* is detailed in *Figure 15**.* At step **1501** an index, i, is set to zero. At step **1502** the next least populated cluster in CL is selected and identified as TMP. At step **1503** a second index, j, is set to zero. At step **1504** the next least populated place in TMP is selected as CFB. At step **1505** the cosine similarity between CFA and CFB is obtained. If the similarity score obtained at step **1505** is greater than a threshold of 0.9, CFA and CFB are considered matched. Alternatively, if TMP is not empty at step **1507,** at step **1508** index j is incremented and steps **1504** onwards are repeated.

If TMP becomes empty before a matching place is found, control is directed to step **1509** where a check is made that there is another cluster to check in CL. In practice this is nearly always the case. However, in exceptional circumstances a match cannot be found and other steps must be taken, such as changing the similarity threshold. Usually, additional clusters will be available, and index i is incremented at step **1511** before steps **1502** onwards are repeated. Eventually a match between CFA and CFB is found. At step **1512** the contents of TMP are moved to LCGB and the cluster represented by TMP is removed from CL.

### Figure 16

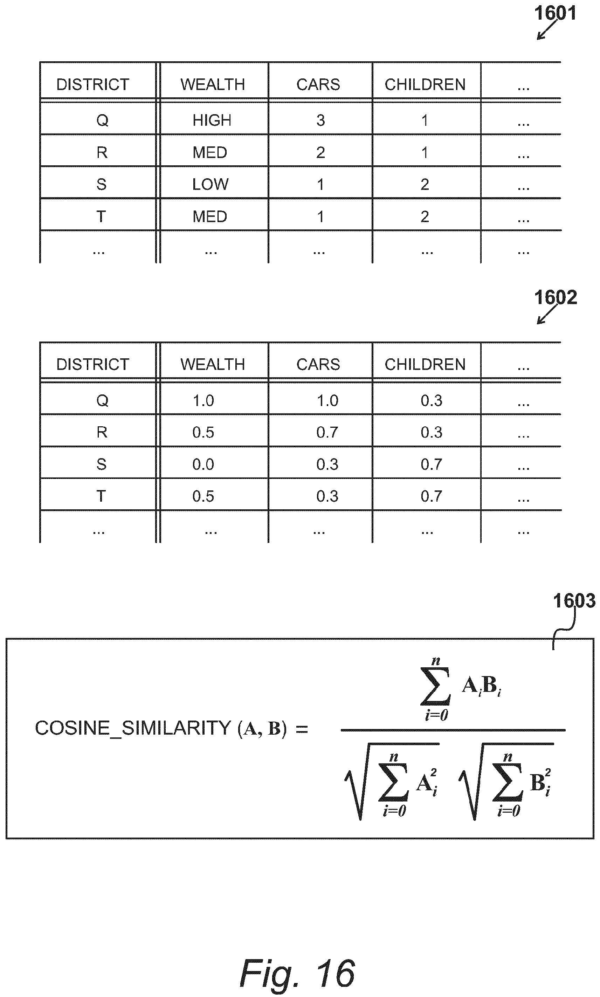

The implementation of steps **1403** and **1505** for obtaining the cosine similarity of two districts shown in *Figure 14* and *Figure 15* is detailed in *Figure 16* using an example. On average, households in district Q **802** have high wealth, three cars and one child. This information is available from census data **111.** Households in district R **803** have different characteristics. Table **1601** shows these characteristics as integer values, although in practice these will usually be fractional. Table **1602** provides the same information, but the values have been normalised to fit in a range of zero to one. This is so that the contributions to the calculated cosine similarity will be equally weighted. For example, wealth, cars and children will contribute equally to the resulting correlation between pairs of districts.

A method of calculation of cosine similarity is shown at **1603,** in which the normalised characteristics for each of two districts are considered as a vector. The resulting similarity score has a range from minus one to one. The calculation **1603** may also be considered as measuring a correlation between entity characteristics.

In an embodiment, similarity scores for all places within a country or geographical region are precalculated at the same time as audience movement data and geographical data. Elements from the precalculated similarity scores are then copied locally into a similarity matrix similar in structure to those shown in *Figure 10* and stored in RAM **403.** The similarity score for a pair of geographical entities is obtained by looking-up a precalculated value. In other embodiments, the similarity score is obtained by performing the calculation **1603** whenever entities are compared.

### Figure 17

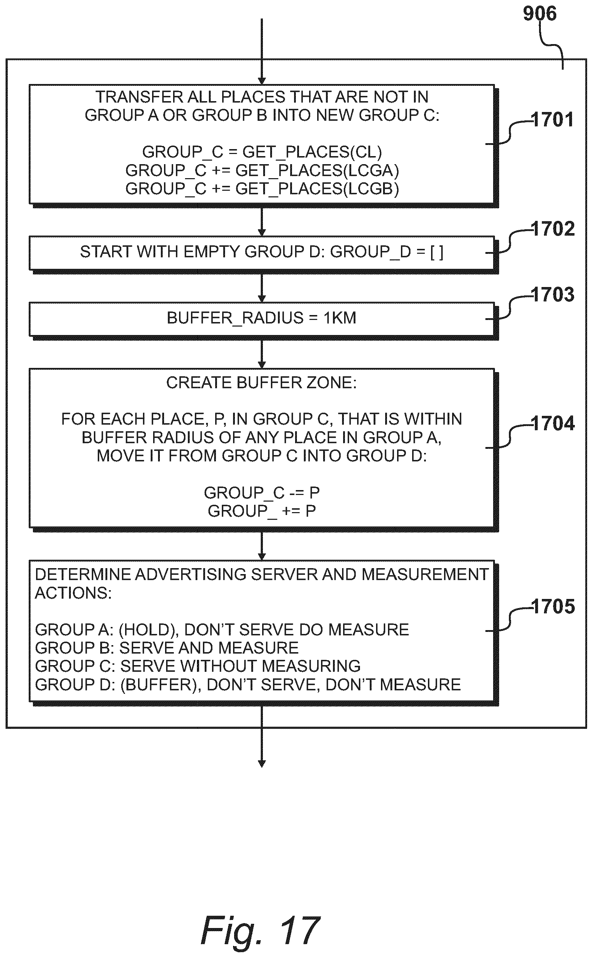

Step **906** for allocating clustered entities to groups C and D, shown in *Figure 9**,* is detailed in *Figure 17*. At step **1701** all places that were not allocated into Group A or Group B are put into new Group C **209.** At step **1702** an empty Group D **210** is initialized. At step **1703** a buffer radius is defined as one kilometre. This value may be set differently, typically in a range from one hundred meters to one kilometre, depending on region.

At step **1704** a buffer zone is created. For each entity in Group C **709** that is within the buffer radius defined at step **1703,** the entity is moved from Group C **709** into Group D **710.** Group D then provides a buffer zone around the holdout group, Group A, so that audience movement between Group A and neighbouring geographical entities does not reduce the accuracy of uplift measurements made by comparing subsequent audience behaviours in groups A and B. Group D **210** is considered to be a buffer group.

At step **1705** advertising server and audience measurement actions are determined in accordance with reference to Group A **207,** Group B **208,** Group C **209** and Group D **210.**

### Figure 18

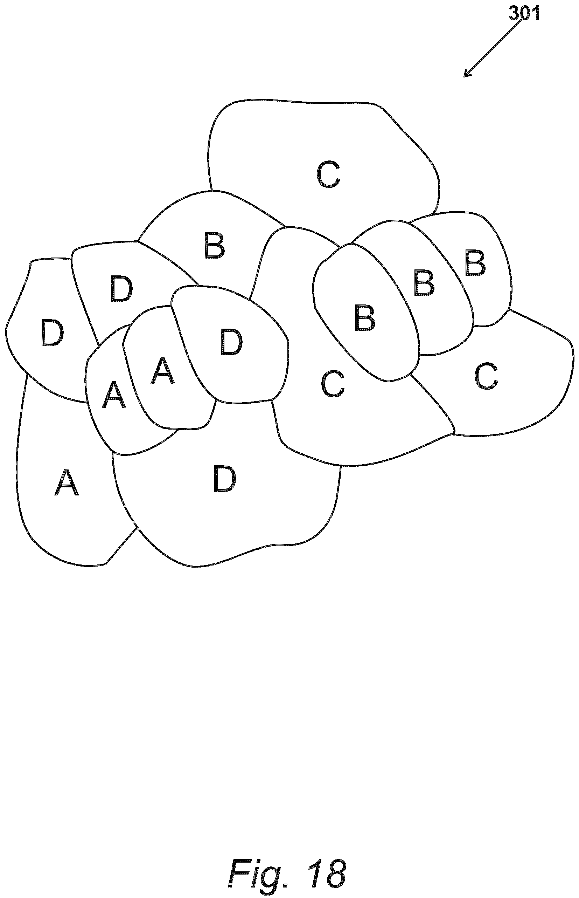

The result of creating a buffer zone in accordance with the step **1704** shown in *Figure 17* is illustrated in *Figure 18*. Districts allocated to Group A **207** are separated from districts allocated to Group C **209** by districts allocated to Group D **210.**

Allocation to all four groups **206** determines where advertising content will be served and where resulting audience behaviour will be measured. Clustering **904** makes group allocation **905** and **906** computationally tractable even for campaigns that have a target area containing thousands of postal districts. Clustering is performed in response to geographical data **112, 601** by processing the geographical data **112, 601** with audience movement signals **109, 602** to define a plurality of entity clusters **1201, 1202.**

Audience similarity for selected pluralities of geographical entities is quantified by obtaining **1403** the cosine similarity between entities in different clusters **1201, 1202.** Similar entities are allocated **1408** to a holdout group **207** and allocated **1409** to a served group **208** in response **1404, 1506** to their similarity score.

As a result, it is possible to determine **907** where advertising content will be served and where audience behaviours will be measured, in such a way as to ensure that audience uplift can be accurately calculated while respecting audience privacy.

### Figure 19

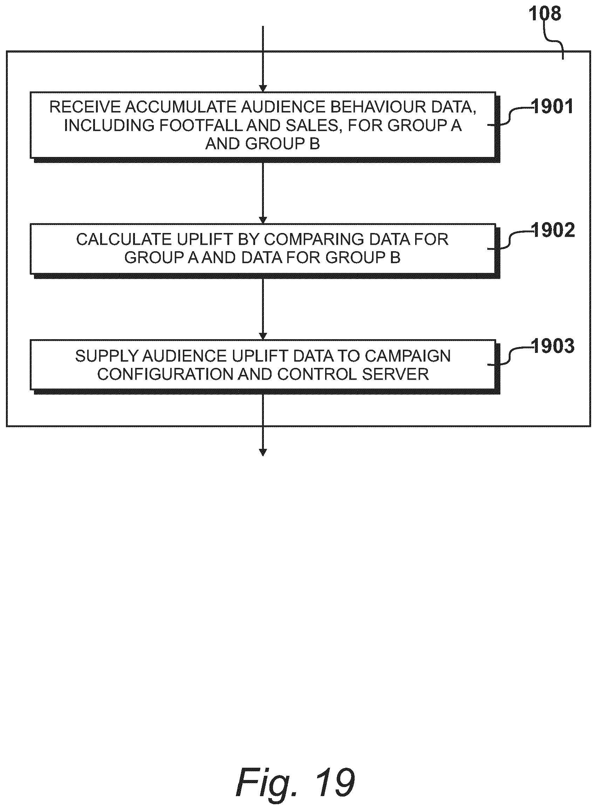

After an advertising campaign has been run for some time, such as a week or a month, statistically significant observations can be made in order to determine audience uplift resulting from the campaign. Steps performed by the audience uplift server **108** shown in *Figure* 1 are summarised in *Figure 19**.*

At step **1901** accumulated audience behaviour data is received from audience behaviour signal storage **109,** including footfall and product sales for districts allocated to Group A **207** and Group B **208.** Footfall data is a simple count of devices in or near a store location where advertised products are available, such as a grocery store chain. Sales data includes sales of the product or products advertised in the campaign.

At step **1902** uplift is calculated by comparing this audience behaviour data for Group A **207,** which is the holdout group to which advertising content is not served, and audience behaviour data for Group B **208,** to which advertising content is served.

At step **1903** audience uplift data is supplied to the campaign configuration and control server **105,** thereby making it available to an operator of the configuration terminal **104.**

### Figure 20

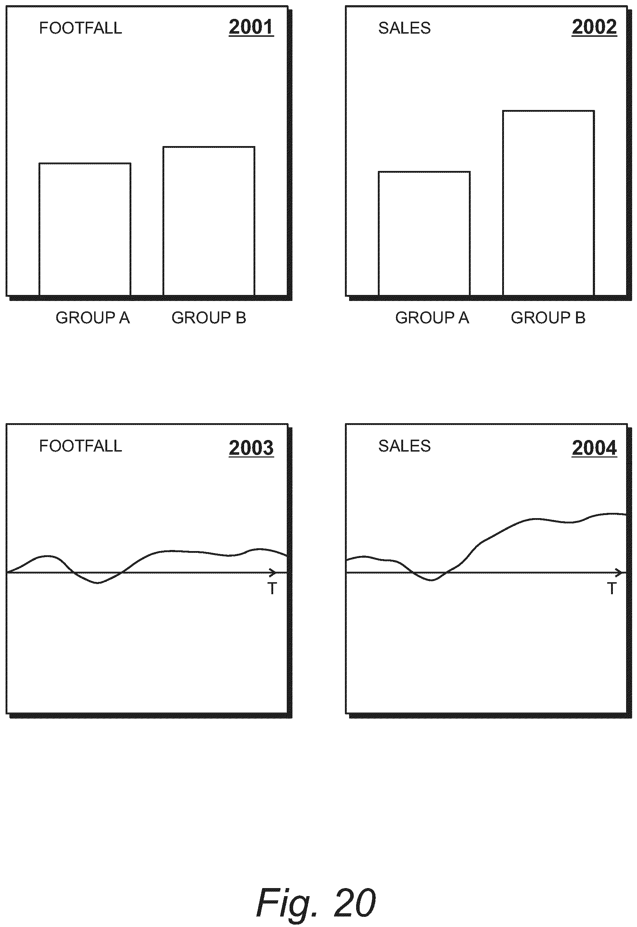

The uplift measurements produced by the steps shown in *Figure 19* are illustrated in *Figure 20**.* At **2001** footfall in the holdout group, Group A **207,** to which advertising content was not served, is slightly lower than footfall in Group B over the same period. This shows that the advertising campaign has probably had some effect. At **2002** sales increase more markedly than footfall **2001** over the same interval.

At **2003,** time series data for the difference in footfall between districts in Group A and districts in Group B shows a more detailed picture of the effect of the campaign over time. At **2004,** time series data for sales shows a similar but stronger effect. The data shown in Figure 20 may be displayed graphically on the configuring terminal **104** or stored for subsequent use.

The accuracy achieved by the uplift measurements illustrated in Figure 20 is only possible by virtue of the preferential transmission **211** of advertising content signals to audience devices for audience members in the preferred group **208,** thereby establishing an optimal audience device configuration for the subsequent measurement of audience uplift.

## Claims

1. A method performed by a processing system configured to receive audience movement signals responsive to audience movement between a plurality of geographical entities (Q, R, S, T, U) and to process the movement signals with audience area data representing the plurality of geographical entities, **characterized by**:
clustering (904) the geographical entities by processing the audience movement signals (110) with the audience area data to define a plurality of entity clusters;
quantifying audience similarity for selected pluralities of the geographical entities by obtaining similarity scores (1403) for entities in different entity clusters;
allocating similar entities to a holdout group (207) and a preferred group (208) in response to their quantified audience similarity; and
preferentially transmitting content signals to audience devices for audience members in the preferred group (208), thereby establishing an optimal audience device configuration for subsequent measurement of audience uplift.

2. The method of claim **1, characterized by** measuring audience uplift in response to signals for a resulting audience behavior in the preferred group and signals for a corresponding audience behavior in the holdout group.

3. The method of claim **2, characterized by** measuring the audience uplift by comparing the signals for a resulting audience behavior in the preferred group with the signals for a corresponding audience behavior in the holdout group.

4. The method of claim **1,** wherein said allocating step is **characterized by** allocating a geographical entity to a buffer group that geographically separates a portion of the holdout group from the preferred group.

5. The method of claim **4,** wherein said allocating step is **characterized by** allocating unallocated geographical entities to a group whose audience will be served the content and for which resulting audience behavior will not be measured.

6. The method of claim **1,** wherein said clustering step is **characterized by** defining the plurality of entity clusters in response to the geographical data in a distance matrix.

7. The method of claim **6, characterized by** pre-calculating elements of the distance matrix.

8. The method of claim **1,** wherein said clustering step is **characterized by** defining the plurality of entity clusters in response to the audience movement signals in a cross-pollination matrix.

9. The method of claim **8, characterized by** pre-calculating elements of the cross-pollination matrix.

10. The method of claim **1,** wherein said step of quantifying audience similarity is **characterized by** obtaining the similarity scores by calculating a cosine similarity between normalized audience characteristics for respective entities.

11. Apparatus for serving content to audience devices on a network in response to audience movement signals responsive to audience movement between a plurality of geographical entities and to process the movement signals with audience area data representing the plurality of geographical entities, **characterized in that** the apparatus comprises one or more processors configured to:
cluster the entities by processing the audience movement signals with the audience area data to define a plurality of entity clusters;
quantify audience similarity for selected pluralities of the geographical entities by obtaining similarity scores for entities in different entity clusters;
allocate similar entities to a holdout group and a preferred group in response to their quantified audience similarity; and
preferentially transmit content signals to audience devices for audience members in the preferred group, thereby establishing an optimal audience device configuration for subsequent measurement of audience uplift.

12. The apparatus of claim **11, characterized in that** the one or more processors is further configured to measure audience uplift in response to signals for a resulting audience behavior in the preferred group and signals for a corresponding audience behavior in the holdout group.

13. The apparatus of claim **12, characterized in that** the one or more processors is further configured to measure the audience uplift by comparing the signals for a resulting audience behavior in the preferred group with the signals for a corresponding audience behavior in the holdout group.

14. The apparatus of claim **11, characterized in that** the one or more processors is further configured such that the allocating includes allocating a geographical entity to a buffer group that geographically separates a portion of the holdout group from the preferred group.

15. The apparatus of claim **14, characterized in that** the one or more processors is further configured such that the allocating includes allocating unallocated geographical entities to a group whose audience will be served the content and for which resulting audience behavior will not be measured.
